**Europäisches Patentamt**

**European Patent Office**

**Office européen des brevets**

(19)

(11) Veröffentlichungsnummer: **0 191 924**
**A1**

(12) **EUROPÄISCHE PATENTANMELDUNG**

(21) Anmeldenummer: **85115454.2**

(22) Anmeldetag: **05.12.85**

(51) Int. Cl.⁴: **F 16 M 13/02**
**F 15 B 15/20, F 16 B 2/06**

(30) Priorität: **24.01.85 DE 3502286**

(43) Veröffentlichungstag der Anmeldung:
**27.08.86 Patentblatt 86/35**

(84) Benannte Vertragsstaaten:
**CH DE FR GB IT LI NL**

(71) Anmelder: **ROBERT BOSCH GMBH**
**Postfach 50**
**D-7000 Stuttgart 1(DE)**

(72) Erfinder: **Klinger, Detlef**
**Parkweg 23**
**D-7143 Vaihingen/Enz 7(DE)**

(72) Erfinder: **Steiner, Josef**
**Hermann-Essig-Strasse 104**
**D-7141 Schwieberdingen(DE)**

(72) Erfinder: **Tröster, Walter**
**Strombergstrasse 6**
**D-7123 Sachsenheim 4(DE)**

(54) **Vorrichtung zum Befestigen eines Geräts.**

(57) Die Vorrichtung zum Befestigen wenigstens eines Geräts (18), z. B. eines Schalters, am Außenumfang des Zylinderrohrs (15) eines Arbeitszylinders weist wenigstens ein. Klemmbackenpaar (11, 12) auf, das durch eine Spannschraube (16) federnd auf das Zylinderrohr gepreßt ist. An einem der Klemmbacken befindet sich eine Montagefläche, an welcher das Gerät (18) befestigt ist. Es können mehrere Klemmbackenpaare verschiedener Ausführung auf einem Zylinderrohr angeordnet werden und somit mehrere Geräte aufnehmen.

FIG.1

FIG.2

**EP 0 191 924 A1**

R. 19 823          0191924

7.12.1984 Wd/Kc

ROBERT BOSCH GMBH, 7000 Stuttgart 1

<u>Vorrichtung</u>

Stand der Technik

Die Erfindung geht aus von einer Vorrichtung nach der
Gattung des Hauptanspruchs. Eine derartige bekannte Vorrichtung weist ein Spannband auf, das um das Zylinderrohr herumgelegt ist und durch Schrauben festgespannt
wird. Am Band befinden sich Halterungsteile für ein an
diesen anzubringendes Gerät. Diese Vorrichtung ist umständlich und aufwendig, so daß sie nur für Sonderfälle
geeignet ist.

Vorteile der Erfindung

Die erfindungsgemäße Vorrichtung mit den kennzeichnenden
Merkmalen des Hauptanspruchs hat demgegenüber den Vorteil,
daß sie leicht anbringbar und über die sogenannte Klauengeometrie kraftschlüssig bzw. federnd direkt am Zylinderrohr radial befestigbar ist. Damit ist sie sehr vielseitig
und auch in verschiedenen Kombinationen verwendbar.

Durch die in den Unteransprüchen aufgeführten Maßnahmen
sind Weiterbildungen der im Hauptanspruch angegebenen Merkmale möglich.

Zeichnung

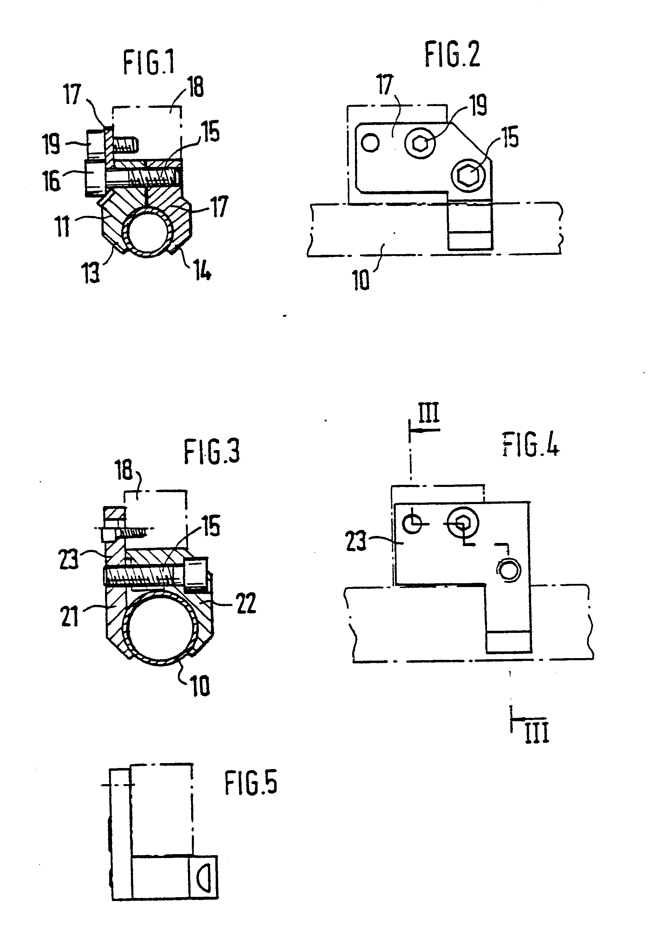

Mehrere Ausführungsbeispiele der Erfindung sind in der
Zeichnung dargestellt und in der nachfolgenden Beschreibung näher erläutert. Es zeigen die Figuren 1 bis 12
mehrere Ausführungsbeispiele, teils im Schnitt teils in
Ansicht und Draufsicht.

Beschreibung der Erfindungsbeispiele

In Figur 1 ist mit 10 ein Zylinderrohr, z. B. eines Pneumatikzylinders bezeichnet, auf dem zwei in derselben Ebene
liegende Klemmbacken 11, 12 befestigt sind, deren Klauen
13, 14 nicht das gesamte Zylinderrohr umschließen. Die
beiden Klemmbacken 11, 12 werden durch eine Schraube 15
zusammengespannt. Zwischen dem Kopf der Schraube 16 und
dem Klemmbacken 12 ist ein Halteblech 17 eingespannt, an
dem ein Gerät 18, z. B. ein Schalter, mit einer Schraube
19 befestigt ist. Die Klemmbacken 11, 12 werden erfindungsgemäß durch die Schraube 15 federnd an das Zylinderrohr
gedrückt. Durch Lösen der Schraube 16 können die Klemmbacken
11, 12 leicht in jede beliebige Lage auf dem Zylinderrohr
gebracht werden. Die Figur 2 zeigt eine Seitenansicht dieser
Klemmvorrichtung.

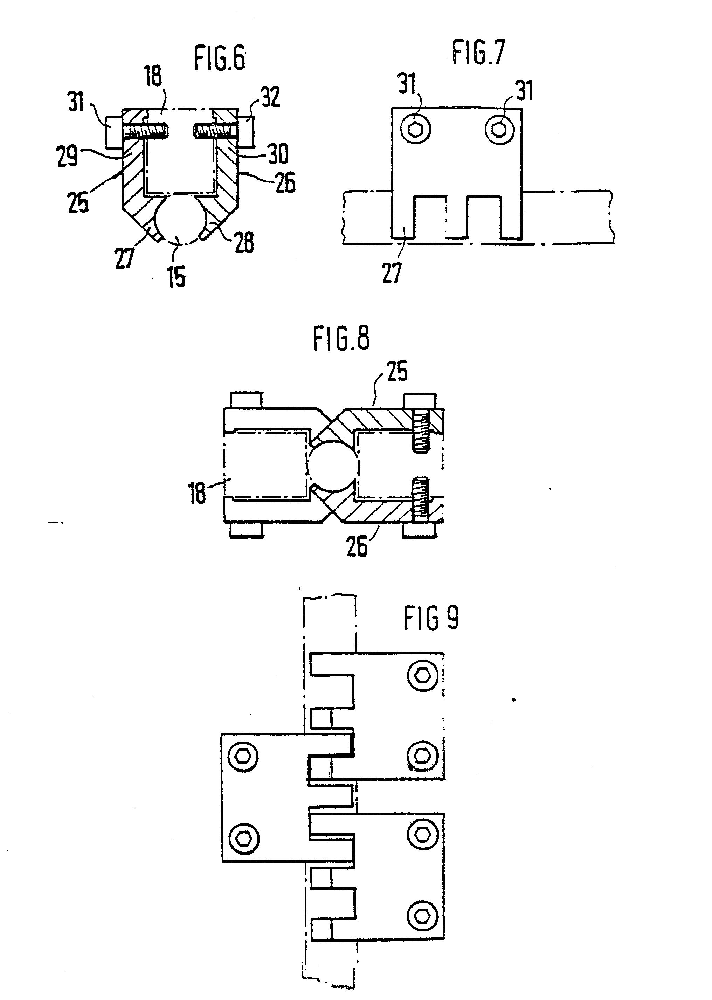

Das Ausführungsbeispiel nach den Figuren 3 und 4 unterscheidet sich vom vorherigen dadurch, daß hier das Halteblech entfällt. Es sind ebenfalls wieder zwei Klemmbacken
21, 22 vorgesehen, die durch die Klemmschraube 15 an das
Zylinderrohr gepreßt werden. Der Klemmbacken 21 weist
einen laschenartigen Fortsatz 23 auf - in der Form ähnlich wie das Leitblech 17 nach dem obigen Ausführungsbeispiel - an welchem wiederum das Gerät 18 befestigt
ist. Die Figur 4 zeigt die Seitenansicht der Haltevorrichtung, die Figur 5 die Draufsicht und die Figur 3 einen
Schnitt längs III-III nach Figur 4.

Beim Ausführungsbeispiel nach den Figuren 6 und 7 - wobei
Figur 7 eine Seitenansicht der Vorrichtung, Figur 6 einen
Querschnitt derselben darstellt - ist das Gerät 18 zwischen zwei Klemmbacken 25, 26 eingespannt. Diese sind so
gestaltet, daß sich von ihren das Zylinderrohr 15 umgreifenden Klauen 27, 28 seitlich nach oben zwei parallel
verlaufende, die Klemmbacken mitgestaltende Laschen 29,
30 erstrecken, zwischen denen das Gerät 18 aufgenommen ist.
Die Spannkraft für die Klemmbacken werden durch jeweils
zwei Schrauben 31 bzw. 32 je Klemmbacke erzeugt, welche
in das Gerät 18 eingeschraubt sind. Aus Figur 7 ist zu erkennen, daß ein Klemmbacken mehrere Klauen 27 bzw. 28 hat.

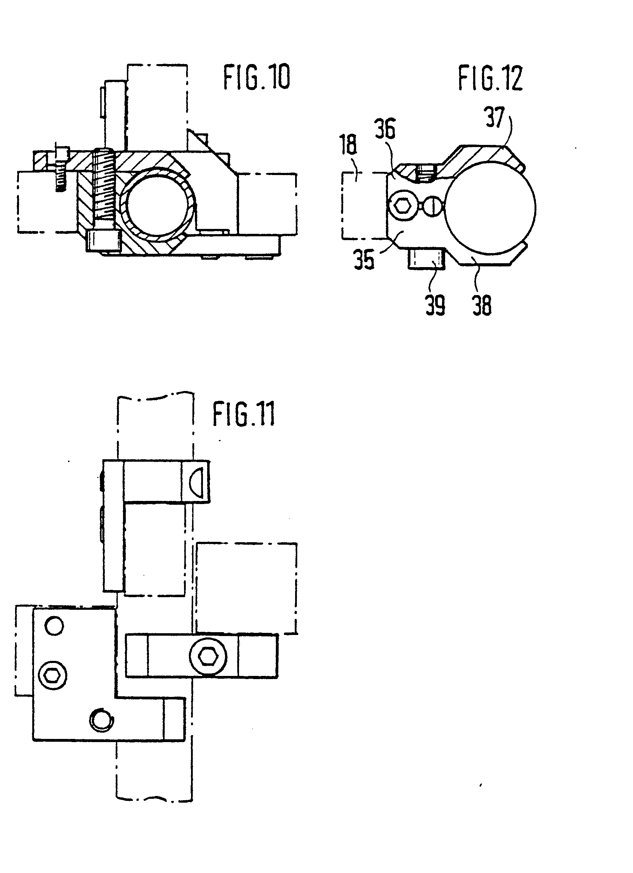

Das Ausführungsbeispiel nach Figur 8 und 9 - Figur 9 zeigt
eine Draufsicht der Vorrichtung, Figur 8 wiederum einen
Querschnitt - zeigt, wie mehrere in Figur 6 und 7 dargestellte Klemmbacken kombiniert werden können, wobei an
jedem dieser Klemmbackenpaare ein Gerät 18 angeordnet
ist. Die Klemmbacken können in ihrer Winkellage beliebig
eingestellt werden.

Das Ausführungsbeispiel nach den Figuren 10 und 11 zeigt
wiederum eine Kombination verschiedener, in den vorhergehenden Ausführungsbeispielen beschriebener Möglichkeiten
von Klemmbacken. Daraus ist zu erkennen, wie flexibel derartige Haltevorrichtungen anwendbar sind.

Das Ausführungsbeispiel nach Figur 12 zeigt einen, aus einem
Profil ausgebildeten zweiteiligen Klemmbacken 35, 36. Im
Klemmbacken 35 ist die Durchgangsbohrung, im Klemmbacken
36 das Mutterngewinde für die Schraube 39 ausgebildet. Die
Befestigung des Gerätes 18 erfolgt axial über die Befestigungsschraube 40 und der Fixierbohrung 42 werden durch das
Zusammenfügen der Klemmbacken 35 und 36 gebildet.

R. 19825

7.12.1984 Wd/Kc   - 1-

0191924

ROBERT BOSCH GMBH, 7000 Stuttgart 1

Ansprüche

1. Vorrichtung zum Befestigen wenigstens eines Gerätes, z. B. eines Schalters, am Außenumfang des Zylinderrohrs z. B. eines Arbeitszylinders mittels einer beliebig feststellbaren Halterung, dadurch gekennzeichnet, daß die Halterung aus wenigstens einem das Zylinderrohr (15) mindestens teilweise umgreifenden und durch mindestens eine Schraube zusammengehaltenen Klemmbackenpaar (11, 12; 21, 22; 25, 26; 35) besteht, und daß die Klemmbacken Mittel für die Anbringung eines Geräts (18) aufweisen.

2. Vorrichtung nach Anspruch 1, dadurch gekennzeichnet, daß sich an einem Klemmbacken (11, 12) eine Lasche (17) zum Befestigen des Geräts befindet.

3. Vorrichtung nach Anspruch 1, dadurch gekennzeichnet, daß die Klemmbacken aus einem Profil gebildet sind und eine axial verlaufende Montagefläche für die Anordnung des Geräts aufweisen.

4. Vorrichtung nach einem der Ansprüche 1 bis 3, dadurch gekennzeichnet, daß wenigstens einer der Klemmbacken selbst eine in Längsrichtung des Zylinders verlaufende Lasche (23) aufweist.

...

5. Vorrichtung nach Anspruch 1, dadurch gekennzeichnet, daß zwei Klemmbackenpaare (25, 26) am Zylinderrohr einander gegenüberliegend angeordnet sind und jedes Klemmbackenpaar eine zum Gerät (18) gerichtete Montagefläche (29, 30) aufweist, deren Flächen parallel zueinander verlaufen, und daß zwischen den Montageflächen das Gerät (18) angeordnet ist, das mit Hilfe von Schrauben (31, 32) befestigt ist, welche zugleich die Haltekraft für die Klemmbacken erbringen.

6. Vorrichtung nach einem der Ansprüche 1 bis 5, dadurch gekennzeichnet, daß mehrere Klemmbackenpaare verschiedener Ausführung zum Festhalten eines oder mehrere Geräte auf dem Zylinderrohr befestigt sind.

7. Vorrichtung nach einem der Ansprüche 1 bis 6, dadurch gekennzeichnet, daß für die Anbringung des Geräts (18) ein Halteblech (17) vorgesehen ist, das zwischen die Befestigungsschraube und einen der Klemmbacken eingesetzt ist.

FIG.1

FIG.2

FIG.3

FIG.4

FIG.5

0191924

FIG.6    FIG.7

FIG.8

FIG 9

0191924

FIG.10

FIG.12

FIG.11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | BOSCH: "Détecteurs de position Bosch", Robert Bosch GmbH, Stuttgart, DE<br>* Seite "Vérins et accessoires", Figur 2, rechte Abbildung * | 1,3 | F 16 M 13/02<br>F 15 B 15/20<br>F 16 B 2/06 |
| Y | Idem | 4-7 | |
| | --- | | |
| X | GB-A-2 121 865 (JENNINGS)<br>* Seite 1, Zeile 69 - Seite 2, Zeile 29 * | 1,2 | |
| Y | | 4-7 | |
| | --- | | |
| A | FR-A- 992 488 (LEBEAU)<br>* Insgesamt * | 6 | |
| | --- | | RECHERCHIERTE SACHGEBIETE (Int Cl 4) |
| A | GB-A-1 123 679 (R. BOSCH) | | |
| | ----- | | F 15 B<br>F 16 B<br>F 16 M |

Der vorliegende Recherchenbericht wurde für alle Patentansprüche erstellt

| Recherchenort<br>DEN HAAG | Abschlußdatum der Recherche<br>28-04-1986 | Prüfer<br>VAN DER WAL W |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82